# EUROPEAN PATENT APPLICATION

(11) **EP 1 536 231 A1**
(43) Date of publication of application: **01.06.2005**
(21) Application number: 04023610.1
(22) Date of filing: 04.10.2004
(51) Int. Cl.: G01N 33/543, B01J 19/00

(54) **Method for stabilizing proteins on a micro-array**

(30) Priority: 25.11.2003 US 723091
(71) Applicant: EPPENDORF AG, 22339 Hamburg (DE)
(72) Inventor: Remacle, José, 5020 Malonne (BE); Gaetan, Michel, 5170 Lesves (BE)
(74) Representative: Becker Kurig Straus

(57) **Abstract**

Provided is a method for stabilizing proteins immobilized on the surface of a solid support (arrays) by incorporating polyols in the solutions to be dispensed. The polyols increase the time dependent and thermal stability of all the spotted proteins present on the same support thus allowing a conservation of the micro-arrays and their use after a long storage period for quantitative multiparametric analysis.

## Description

### FIELD OF THE INVENTION

This invention relates to the stabilization of proteins immobilized on the surface of a solid support (arrays) by incorporating polyols in the solutions to be dispensed by an arrayer. The polyols increase the time and thermal stability of all the spotted proteins present on the same support thus making possible the conservation of the micro-arrays and their use after a long storage period for quantitative multiparametric analysis.

### BACKGROUND OF INVENTION

Protein arrays provide a general tool that allows biological researchers to perform multiparametric assays and to adapt the assays for high throughput. Protein arrays are patterned arrays of known biomolecules present on the a support that may undergo a molecular recognition with specific proteins amongst a complex mixture of proteins present in biological fluid or extracts. Protein arrays are developed to screen for multiple compounds, such as antibodies, ligands and receptors that interact with the proteins of the arrays.

Various methods have been described for the automatic fabrication of micro-arrays.

US-P-5,807,522 and 6,110,426 disclose methods for fabricating micro-arrays of biological samples. The method involves dispensing a known volume of a reagent at each selected array position, by tapping a capillary dispenser on the support under conditions effective to draw a defined volume of liquid onto the support. The apparatus is designed to produce a micro-array of such regions in an automated fashion.

US-P-6,101,946 describes a device for fabricating micro-arrays of biochemical substances, consisting of a holder and one or more printing pins. The holder contains apertures with regular spacing that define the location of one or more printing pins during the printing process. The tip of each printing pin contains a sample channel that holds a predetermined volume of biological or chemical sample and a point that is machined to precision with an electronic discharge machine (EDM). The device can be attached to a motion control system for precise and automated movement in three dimensions. The flat tips of the pins are immersed in a biochemical sample such that a predefined volume of sample fills the sample channel of each pin. The holder and pins are then moved in proximity to a printing substrate whereby direct contact between the flat tips of the pins and the surface results in the transfer of a small amount of the sample onto the solid surface.

US-P-6,387,330 describes a method and a device for storing and dispensing specified subsets from a collection of tens, hundreds or thousands of different reagents to specified locations within micro-titer trays or micro-array substrates. The reagents of interest are stored in racks of syringe-like dispensers. These dispensers and/or substrates and/or actuators are controllably moved by automated means to a dispensing position where a single action, vibration and weighing system transfers a controlled quantity to a specified location in a micro-titer tray or the like. Such array technologies have been mainly applied to forming arrays of individual nucleic acids. DNA micro-arrays are stable and relatively simple to construct.

US-P-6,558,907 discloses a method for fabrication of high-density nucleic acid arrays. The method comprises contacting a solid support with a solution of nucleic acid, the solution comprising about 30% to about 80% dimethylsulfoxide (DMSO) by volume, sodium chloride and sodium citrate salt containing buffer (SSC) at a final concentration of from about 0.1.times. The composition enables long-term storage and preserves integrity of nucleic acid without instability by precipitation or aggregation of said nucleic acid.

Despite their obvious value in gene expression profiling, such arrays reveal relatively little information about the final concentration of gene products in a cell, and they reveal nothing about post-translational modifications, protein activity, and protein-protein interactions. For this reason, increasing attention is focusing on the design of protein arrays to complement DNA micro-arrays.

The development of protein array is lagging behind DNA arrays due to the complex coupling chemistry involved, and also due to intrinsic characteristics of micro-arrays, being mainly the miniaturization of the assay and the presence of multiple proteins, which multiple proteins exhibit different characteristics and which have to be spotted and kept under dry conditions on the surface of the array.

Proteins and polypeptide-containing compounds, commonly exist in their naturally occurring hydrated state in the form of complex, three-dimensional folded conformations generally known as the tertiary structure. In essentially all cases, the activity of the compound, whether as enzyme, antibody, antigen, receptor, etc. is critically dependent on the said tertiary structure of the proteinaceous compound and will be severely reduced or even eliminated if this structure is disturbed, even though the chemical formula of the compound may not have changed. To maintain a tertiary structure is even more problematic, when multiple different proteins are to be spotted on the micro-array and have to be kept in a dry state for storage in an micro-array format.

Thus, the provision of a protein micro-array precludes that all the capture proteins are delivered under the conditions onto the surface of a solid support that maintains their specific tertiary structure. Also, if used as manufactured product, protein arrays have to be stored for a long time before use, usually more than 3 months. After this period, they will be used to test a biological sample for multiple targets detection. Each of the immobilized proteins shall give a signal and all the signals have to be compared and related to the same sample. Thus, all the proteins have to react with the same efficiency in order to obtain a meaningful quantitative assay especially over time of storage. Also, the small volume of deposition, which is normally in the range of 1 nanoliter, and even lower, presents an additional problem.

In WO03/025580 the inventors propose glycerol for improving the spot morphology of the proteins for the production of protein arrays. They tested different printing buffers composed of an aliphatic electrically-charged detergent like SDS and glycerol in PBS. It is taught that the buffer composition need to be adapted to the solid support onto which the arrays are printed and to the contact printing system (i.e. split pin, pin and ring technologies). Glycerol based protein micro-arrays are, however, not very well adapted for protein arrays since glycerol, due to its viscous nature, is known to retard the movement of the protein throughout the surface of the support and thus lowers binding efficiency.

Thus, there is a need to obtain a micro-array with a number of proteins spotted thereon which shows high stability for the time required by the manufacturing process and distribution for all the different proteins for the same array. Also, there is a need for a means of protecting such protein arrays from deactivation upon drying and on storage.

### Definitions

A "protein micro-array" is an arrangement of multiple spots in a pattern on the solid support, wherein the spots comprise capture protein entities-within. Although the pattern is typically a two dimensional pattern, it may also be a three-dimensional pattern. There may be several arrays on one substrate. In the context of the present invention, a protein micro-array is an array formed on a miniature scale, wherein the term "protein" refers to said protein entities and may include polypeptides, oligopeptides and peptides.

The term "capture protein" refers to a protein that is capable of specifically binding to one target protein, or to a family of proteins, or to one or more member (s) of a plurality of target proteins, or portion(s) thereof. Preferred capture proteins are antibodies, antigens, receptors, ligands and enzymes.

Preferred supports are of glass or plastic, and generally the surface of the support can be chemically modified to allow a covalent binding of the capture protein. The support can also be covered by an "adapter" which has a high binding affinity for an hapten fixed on the capture protein. A typical example is the use of streptavidin as adaptor for the binding of biotinylated capture proteins.

The term "spot" is applied to each individual area of solid support surface over which the protein arrayed is permanently distributed after the protein is delivered to the solid support surface as a protein solution in printing buffer, and dried thereon. Preferably the diameter of spots present on the array is comprised between 100 and 1000 µm and more preferably between 200 and 500 µm. Smaller spots going down to 1 µm diameter are also possible when using appropriate spotting and detection methods. The volume applied to the substrate surface 0.5-10 nl depending on the type of the printing technology used.

The term "arrayer" is a robotic device allowing the automatic deposition of the capture proteins solution over the surface of the solid support. The deposition can be performed by droplet delivery system (piezzo, inkjet printing, micropipetting, nanopipetting) or by contact printing using pins.

The term "discrete analyte-specific region" shall designate a spot on the support, which is represented by a discrete region on the support spaced apart from another location. Each spot bears a particular protein and has a particular location on the support so that this location can be identified as having the particular protein.

The term "antibody" means an immunoglobulin, whether natural or partially or wholly synthetically produced. The term also includes all derivatives or fragments thereof that maintain specific binding ability. The term also covers any protein containing a binding domain that is homologous or largely homologous to an immunoglobulin-binding domain. An antibody may be monoclonal or polyclonal. The antibody may be of any immunoglobulin class. Purified derivatives of the IgG class are preferred in the present invention.

The term "ligand" denotes a reactive molecule that binds to a protein arrayed in the micro-array (e. g. a capture receptor) or which is itself arrayed in the micro-array and is bound by a detection molecule (e. g. a capture antigen). Preferred ligands are antigens and receptors, preferred detection molecules are antibodies, which may themselves be labeled with a reporter molecule. Ligands may be peptides, polypeptides or proteins, and may be arrayed on a substrate in order to bind and estimate the abundance of the corresponding receptor molecule or binding protein in a sample.

The term "receptor" refers to a molecule that has an affinity for a given ligand. Receptors may be naturally-occurring or synthetic molecules.

The term "biological sample" describes any soluble substance extracted, excreted, or secreted from an organism or tissue of an organism. Samples of particular relevance to the present invention include but are not limited to whole blood, serum, plasma, urine, synovial fluid, cerebrospinal fluid, tissue extracts, organ extracts and cell extracts.

The term "activity" refers to the properties of the protein dependant of its three dimensional configuration. Activity is either an enzymatic activity for enzyme, ligand binding for receptor, antigen-antibodies recognition, or specific protein-protein or protein-chemical binding such as streptavidin-biotin.

The term "polyol" means polyhydroxy alcohol. The polyols according to the invention are organic molecules made of a carbon backbone and some oxygene groups being only alcohol groups. Polyols according to the invention exclude aldose and cetose sugars.

The term "dry atmosphere" refers to an atmosphere having lower than 80% humidity and preferably lower than 60% humidity.

L and D "enantiomers" is a pair of chiral isomers (stereoisomers) that are direct, nonsuperimposable mirror images of each other.

### Figures

Figure 1 shows the results of a study of the effect of Mannitol, Sorbitol and Maltitol on TNF-alpha receptor conservation and ligand recognition after 3 months storage at 4°C;
Figure 2 shows the effect of Mannitol on the conservation of antibody and detection of their binding capacity on micro-arrays. Example of 3 cytokines detection after 1 month of storage at 4°C;
Figure 3 shows the effect of Mannitol on the conservation of antibody and detection of their binding capacity on micro-arrays. Example of cytokine Rantes detection after 2.5 months of storage at 4°C;
Figure 4 shows the effect of Mannitol on the conservation of antigens and detection of their binding capacity on micro-arrays. Example of two auto-immune antibodies detection after 6 months of storage at 4°C;
Figure 5 shows the effect of Mannitol and Maltitol on the conservation of antibody and detection of their binding capacity on micro-arrays. Example of p38 sandwich detection after 1 month of storage at 4°C.

### DETAILED DESCRIPTION OF THE INVENTION

The present invention provides a novel method for the production of protein micro-arrays wherein an universal excipient is used for spotting proteins/polypeptides onto specific/predetermined locations of a protein micro-array. In this respect a protein micro-array is obtained allowing conservation of the activity of a variety of different protein(s) for a long time period, i.e. months or even years, and enabling a comparison of the quantification between the different data obtained from the different proteins. In particular, the present method allows for the production of a protein micro-array that conserves at least 70% of activity after storage of at least 1 month, preferably of at least 6 months and even more preferably of at least 12 months at refrigerator temperatures of between 0°C and 8 °C.

More precisely, the proposed method comprises the production and conservation of protein micro-arrays formed of discrete analyte-specific regions present on a solid support, wherein each discrete region contains a selected capture protein, wherein
- a C₅ to C₇ polyol is added to a protein being in an aqueous solution used for subsequent spotting, or is added to a micro-array onto which proteins have been previously spotted, with a spotting volume normally being less than 1 microliter,
- allowing covalent fixation of the proteins on the surface of the support having possibly an adaptor for the fixation ,
- allowing the spotted solution to dry on the support.

The micro-array thus obtained may be used for identification and/or quantification of proteins present in a biological sample, by binding on capture proteins, wherein said capture proteins spotted on the support according to the present method have at least 70% of their activity as compared to the micro-array stored for 1 day or less, then stored over a time period of 1 month or preferably for 3 months or even preferably for one year or even more.

The polyols considered in the present invention are C₅, C₆ or C₇ polyols, which dissolve very easily in spotting solutions with different aqueous buffers and which are compatible with the solubilization of essentially all proteins. The polyols may also be incorporated in a concentrated solution for storage, which may be diluted just before spotting without any detrimental effect to the proteins.

The polyols may be cyclic or may have a linear backbone and may contain atoms/groups other than hydroxy and hydrogen, and may be either the D or L enantiomer. The polyols may also be linked to other molecules by an alcohol function or by another function. For example, sorbitol is linked by its C4 alcohol to alpha-D glucose to form maltitol.

The preferred polyols according to the invention are mannitol, maltitol and sorbitol.

In general, the concentration of the polyol contained in the spotting solution may preferably be in the range of between about 0.5 to 10 %, preferably 1 % and 5 % to show the desired effect.

The aqueous solution containing the polyols may also contain an anti-bacterial agent, such as e.g. azide, which may be present in the solution in a concentration of between 0.01 and 0.5 % and preferably between 0.05 and 0.2 %, or borate at a concentration between 1 and 100 mM and preferably between 25 and 75 mM.

The capture proteins to be deposited onto the surface of the solid support may be any protein/polypeptide that may serve for capturing a desired target and is preferably selected from antibodies, antigens, ligands, receptors and enzymes. The different capture proteins to be deposited onto the support are usually present in the spotting solutions in an amount sufficient for providing an adequate assay system, generally in an amount of from about 2 to 10 ng/µl, preferably between 3 and 6 ng/µl of spotting solution.

The capture proteins are usually fixed onto the solid support or substrate by means of a chemical reaction. The proteins may therefore contain or bear a specific reactive chemical function or group, which reacts with the support or substrate, that may be functionalized, eventually leading to a covalent binding. In a preferred embodiment, the surface groups of the support comprise reactive chemical groups including aldehyde, epoxide, acrylate, thiocyanate, N-hydroxysuccinimide which react with the amino groups present on the proteins thus leading to their immobilization. Usually it is preferred to effect binding between the amino groups present on the proteins and an aldehyde covered surface which leads to an imine bond that is then reduced in the presence of NaBH₄.

The protein micro-array is usually stored in a dry atmosphere containing less than 50% humidity. The storage may be performed under air or under an atmosphere of inert gas, e.g. N₂ or Ar, and also under reduced pressure or under partial vacuum with pressure comprised between 0.1 and 100 mm Hg. The storage temperature is preferably at 4°C ranging from 0°C to 8°C or being also at room temperature, between 15 and 30°C or preferably between 20 and 25°C. Freezing may also be possible and higher temperature are acceptable for limited periods of time.

The selected proteins are deposited onto the surface of the solid support by droplet delivery system, piezzo, inkjet printing, micropipetting, nanopipetting. In a preferred embodiment, deposit of the selected proteins on the surface of the solid support is by contact printing system.

As detailed above, the polyols may be added immediately to the spotting solution containing the respective proteins or may be contacted with the micro-array after proteins have been spotted thereon.

The solid support of the substrate for the construction of the protein micro-array according to the invention is preferably selected from the group consisting of glasses, electronic devices, silicon supports, silica, metals or mixtures thereof prepared in a format selected from the group of slides, discs, gel layers and/or beads. Beads are considered as arrays for as long as they have characteristics which allow to differentiate them from each other, so that identification of the beads is correlated with the identification of a given capture molecule and so of the target sequence. The support is made of any component being porous or non porous. Preferred supports are glasses, plastic, being transparent and showing low autofluorescence level

In another embodiment of the invention, the capture proteins may be fixed on the surface of the solid support through binding via an adaptor already present on the support. In an embodiment streptavidin is fixed onto the support and biotinylated capture proteins are incubated with the coated support so that binding of the capture protein occurs by recognition between biotin and streptavidin. Another possibility includes the use of a suitable antibody-antigen or receptor-ligand pair for obtaining an efficient binding of capture proteins onto the support. Different alternatives are at the disposition of the person skilled in the art.

In a particular embodiment, the capture proteins are present on at least 4, 10, 20, 50, 100, 500 or 1000 physically different supports being preferably beads, each bead being identified by a preferably different chemical or physical features, e.g. size, magnetism, etc..

The present invention also covers the protein micro-arrays composed of at least 4 discrete analyte specific regions present on a solid support, wherein each discrete analyte region contains a selected capture protein fixed thereon in the of a C₅ to C₇ polyol.

In a particular embodiment, the protein micro-arrays are composed of at least 4, 10, 20, 50, 100, 1000, 10000 discrete analyte specific regions having specific capture molecules for at least 3, 10, 20, 50 different target proteins to be detected and/or quantified. Such micro-arrays have at least 3, 10, 20, 50, 100, 1000 or 10000 spots/cm².

Detection of the target protein captured on the micro-array may be carried out via any physical or chemical detection methods known in the art including but not limited to the use of fluorescence, colorimetry, bioluminescence, chemiluminescence, electric, surface plasmon resonance, electromagnetic signals, etc. Detection of the target molecule bound to the protein is preferably performed using direct or indirect fluorescent labeling. In another embodiment, the detection is performed in colorimetry based on the absorbed transmitted light or the scattered light. The colorimetric detection is performed after labeling the target molecule bound to the protein by a direct or indirect method leading to the formation of a precipitate which stick to the surface. The preferred precipitate is a metallic precipitate obtained by catalytic reduction of silver nitrate in the presence of hydroquinone and described in patent EP1179180B1.

Another aspect of the invention relates to a kit or a kit-in-parts for the detection, identification and/or quantification of target proteins preferably selected from antibodies, antigens, ligands, receptors and enzymes that are possibly present in a biological sample or test solution, said kit comprising a protein micro-array as described above. The kit may further comprise the necessary solutions and reagents for the detection of target proteins when captured on said micro-array.

The kit may further comprise means and media for performing the method of the invention to obtain a stabilized protein micro-array of the invention, bearing target-specific capture proteins formed of discrete analyte-specific regions present on a solid support, wherein the micro-array has a density of at least 4 discrete analyte-specific regions of capture proteins per cm² of solid support and wherein each discrete region contain a selected capture protein.

The following examples illustrate the invention without limiting it thereto.

### Example 1:

### Study of the effect of Mannitol, Sorbitol and Maltitol on TNF-alpha receptor conservation and ligand recognition after 3 months storage at 4°C

### 1. Spotting of the TNF-alpha receptor type II on glass slides

In this experiment, the soluble form of the TNF-alpha receptor was spotted in Protein spotting buffer (Eppendorf AG, Hamburg, Germany) to which 3 different excipients were added at 1% concentration (Mannitol, Sorbitol and Maltitol). In a control slide, the receptor was spotted in absence of excipient. After drying and 3 months storage at 4°C, slides were put in contact with the Ligand (TNF-alpha). The detection was then made with an anti-TNF-alpha antibody. A secondary antibody was then used for fluorescent detection.

The spotting was performed with a pin and ring arrayer (with a pin of 0.250 mm diameter and the spots are around 0.35 mm final diameter). The PCR Creative chips (epoxide chemistry) were used as glass support (Eppendorf AG, Hambourg, Germany). Solutions were put in a 384 wells plate and the plate holder temperature was set at 15°C. After spotting, the slides were stored at 4°C for 3 months. The slides were revealed as follows :

### 2. Post Spotting treatment of the slides

Slides were washed 4 times for 1 min with Phosphate Washing Buffer (Eppendorf AG, Hambourg, Germany). For the detection of TNF-alpha, the slides chambers were incubated with 40 µl of the TNF-alpha in a final volume of 50 µl for 2 h in a thermomixer (Eppendorf AG, Hambourg, Germany) at 400 rpm, 22°C. As negative controls slides were used for which the incubation of TNF-alpha has been omitted.

After 3 washes for 2 min with Washing Buffer (Eppendorf AG, Hambourg, Germany), slides were incubated for 1 h at 20°C with a rabbit anti-TNF-alpha antibody diluted 1/100 in blocking buffer (Eppendorf AG, Hambourg, Germany). After 3 washes for 2 min with Washing Buffer, slides were incubated for 45 min at 20°C with an anti-rabbit IgG Cy3 conjugated antibody, diluted 1/1000 in blocking buffer. Slides were washed 4 times for 2 min in Washing Buffer and then washed 2 times for 2 min in distilled water before being scanned using the confocal fluorescent scanner ScanArray (Packard, USA) at a resolution of 10 µm. Data were quantified using the Imagene software.

### 3. Results

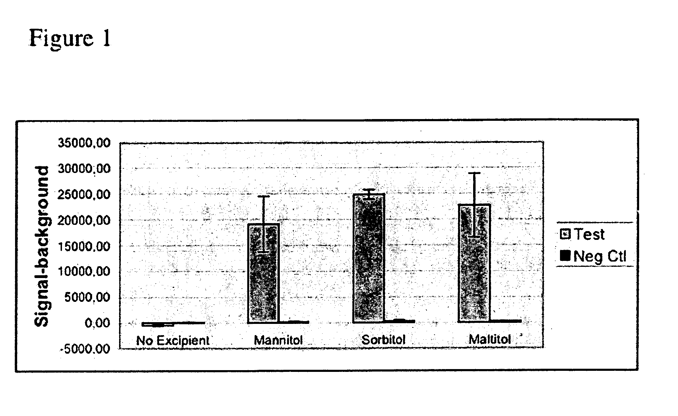

Receptors are very sensitive to denaturation and the conservation of their native conformation is crucial in order to allow the recognition with their ligand. The quantified results show a very good stability of the spotting receptor after three months of storage when Mannitol, Sorbitol and Maltitol are added to the spotting buffer (Fig. 1).

### Example 2:

### Effect of Mannitol on the conservation of antibody and detection of their binding capacity on micro-arrays. Example of 3 cytokines detection.

The goal of this experiment was to test the stability of spotted antibody in Protein spotting buffer (Eppendorf AG, Hambourg, Germany) to which Mannitol 1% has been added.

### 1. Spotting of anti-cytokine antibodies on glass slides

The Diaglass (aldehyde chemistry) slides (Eppendorf AG, Hambourg, Germany) were used as glass support. The antibodies specific of the 3 cytokines (MIP1b, Eotaxin and Rantes) to be detected were arrayed as described in example 1. For each antibody, 6 spots were present on the array, and positive and negative controls of spotting were included. Following spotting, slides were stored at 4°C for 1 month.

### 2. Post Spotting treatment of the slides

Slides were contacted with 50 µl of Human chemokine 3-Plex Standard (Biosource, Belgium), at dilution 1/5. Negative controls were slides for which the incubation of chemokine 3-Plex Standard has been omitted.

Incubation was performed for 2 hr in a thermomixer (Eppendorf AG, Hambourg, Germany) at 1400 rpm, 22°C. The slides were washed 2 times for 2 min with Washing Buffer (Eppendorf AG, Hambourg, Germany). The slides were dried and placed in a hybridization chamber. The slides were then incubated for 1 h with the specific detection cocktail antibody diluted 1/1000 in Blocking Buffer in a volume of 50 µl. After 2 washing for 2 min with Washing Buffer (Eppendorf AG, Hambourg, Germany), slides were incubated for 45 min at 20°C with the conjugated antibody (anti-biotin Cy3) diluted 1/1000 in Blocking Buffer. The slides were washed 2 times for 2 min with Washing Buffer, then rinsed twice in distilled water, dried and scanned.

### 3. Results

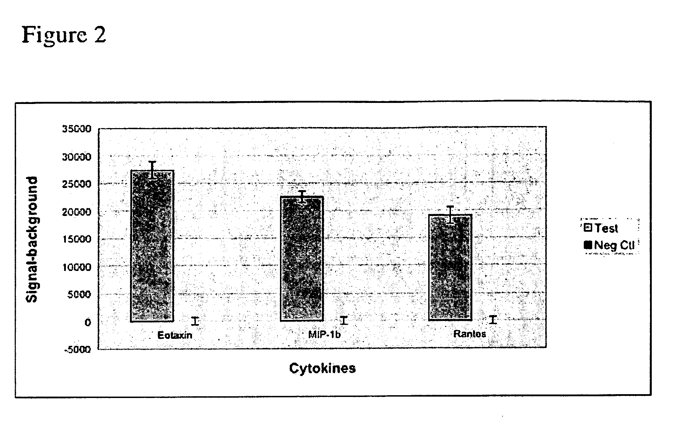

The detection of the 3 cytokines MIP1b, Eotaxin and Rantes, is highly specific, the negative control is correct and no background was notified (Fig. 2).

### Example 3

### Effect of Mannitol on the conservation of antibody for several months and detection of their binding capacity on micro-arrays. Example of cytokine detection

The goal of this experiment was to test the stability of spotted antibody in Mannitol 1% for keeping their binding capacity with time of storage at 4°C. Once the slides were spotted, binding and detection were carried out the next day using Rantes as antigen. The same detection was repeated 2.5 months later using the identical antigen.

The spotting and detection were performed as described in example 2. 100 pg of Rantes were used for the protein incubation. In the negative control the incubation of Rantes has been omitted.

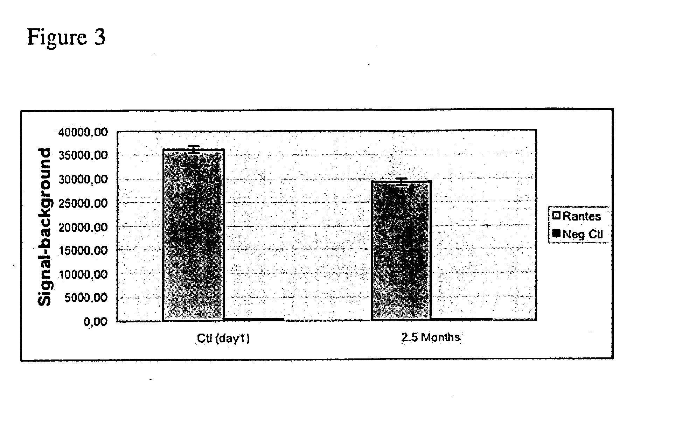

The experiment showed a very good conservation of the spotted antibody over 2 months of storage at 4°C (Fig 3). The spotted antibodies still have 81% of their binding activity after 2.5 months of storage as compared to day 1. The detection of Rantes is highly specific, the negative control is correct and no background is notified.

### Example 4

### Effect of Mannitol on the conservation of antigens for several months and detection of their binding capacity on micro-arrays. Example of two auto-immune antibodies detection

The goal of this experiment was to study the stability of spotted auto-antigens in Mannitol 1% and their ability to fix their corresponding antibodies. Once the slides were spotted, detection of the antibodies were carried out the next day using a specific serum sample, which had previously been identified as SSA and SSB positive. The same detection was repeated 6 months later using the identical serum.

### 1. Spotting of the antigens on glass slides

Antigens were diluted to an appropriate concentration in a Protein spotting buffer (Eppendorf AG, Hambourg, Germany) to which Mannitol 1% was added. The spotting was carried out with a pin and ring arrayer (with a pin of 0.250 mm diameter and the spots were around 0.35 mm final diameter). The Diaglass (aldehyde chemistry) slides (Eppendorf AG, Hambourg, Germany) were used as glass support.

### 2. Post Spotting treatment of the slides

After 4 washes for 1 minute with Phosphate Washing Buffer (Eppendorf AG, Hambourg, Germany), nonspecific binding sites were blocked with Blocking Buffer (Eppendorf AG, Hambourg, Germany) for 1hr 30min at 20°C. For detection of auto-immune antibodies, the slides chambers were incubated for 1hr at 20°C with different human sera diluted to 1/500 in the Blocking Buffer. After 4 washes for 1 min with Washing Buffer, slides were incubated for 45 min at 20°C with anti-human IgG(H+L) cy3 conjugate diluted 1/500 in blocking buffer. Slides were washed 4 times for 1 min in Washing Buffer and then washed 2 times for 2 min in distilled water before being read in a fluorescence array scanner.

### 3. Results

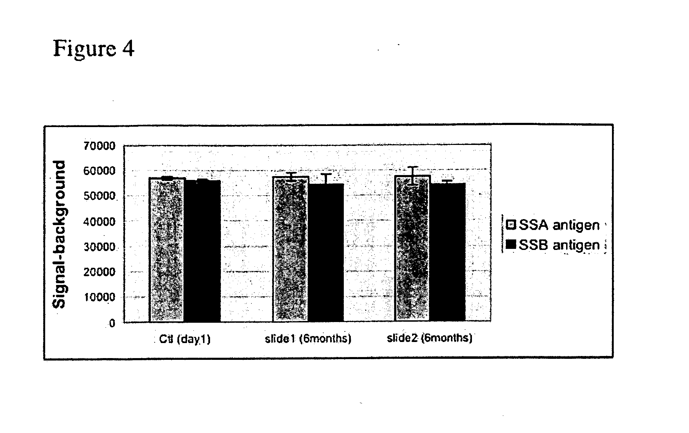

Two slides were tested for each antigen. The results showed a clear stabilization of the spotted antigens in the appropriate conditions (Fig. 4). This means that if the antigen (or antibody) is spotted at the right concentration using mannitol in the spotting buffer, the stability may be secured for at least 6 months. The quantification results also showed a great reproducibility among experiments and replicates.

### Example 5

### Effect of Mannitol and Maltitol on the conservation of antibody and detection of their binding capacity on micro-arrays. Example of p38 sandwich detection

The goal of this experiment was to study the stability of spotted antibodies in Mannitol and Maltitol 1% over 1 month. Once the slides were spotted, detection of the p38 protein were carried out the next day using recombinant p38 as the antigen. The same detection was repeated 1 month later using the identical antigen. The spotting and detection were performed as described in example 2. 80 pg of recombinant p38 was used for the protein incubation.

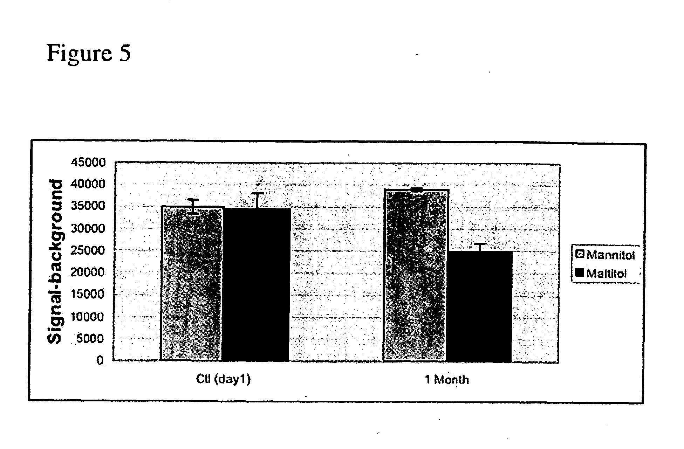

The experiment showed a very good conservation of the spotted antibody over more than 1 month of storage at 4°C (Fig. 5). The antibodies spotted in Maltitol still had 72% of their binding activity after 1 month of storage as compared to day 1. The conservation in Mannitol was even better since no loss of activity was notified after 1 month storage.

### Example 6

### Effect of Mannitol on enzyme substrate conservation and enzyme recognition. Example of phosphorylation of myelin immobilized on the surface of solid support

The goal of this experiment was to study the stability of myelin, a spotted substrate to assay for the activity of a kinase

### 1. Spotting of myelin on glass slides

The myelin basic protein (Upstates, USA) was diluted to an appropriate concentration in protein spotting buffer containing Mannitol 1%. The spotting was performed with a pin and ring arrayer (with a pin of 0.250 mm diameter and the spots were around 0.35 mm final diameter). The Oligo (epoxy chemistry) slides (Eppendorf AG, Hambourg, Germany) were used as glass support. Following the spotting, slides were put at 4°C until use.

### 2. Post Spotting treatment of the slides

After 4 washes for 2 minutes with Phosphate Washing Buffer (Eppendorf AG, Hambourg, Germany), slides were dried. For detection of kinase activity, the slides chambers were contacted with 40 µl of MAP kinase 2/ERK2 active (Upstates, USA) in assay dilution buffer I (ADBI) (Upstates, USA) containing Mg/ATP cocktail (Upstates, USA), at a concentration of 10 ng/40 µl mix and 5 ng/40 µl mix. Incubation was performed for 30 min in a thermomixer (Eppendorf AG, Hambourg, Germany) at 400 rpm, 30°C. After 3 washes for 2 min with Tris 1X, slides were then incubated for 30 min at 20°C with Tris 1X + BSA1%. Slides were then incubated for 1 h at 20°C with anti-phospho-MBP cloneP12 (Upstates, USA) at 1µg/ml in Tris 1X +BSA1%. After 2 washes for 1 min in Tris 1X and 1 wash in Washing Buffer, slides were incubated for 45 minutes at 20°C with anti-Mouse IgG (H+L) cy3 conjugate diluted 1/1000 in blocking buffer. Slides were washed 4 times for 2 min in Washing Buffer and 2 times in distilled water before being read in a fluorescence array scanner.

### Example 7

### Effect of Mannitol on enzyme inhibitor conservation and enzyme recognition. Example of binding of caspase 3 by recognition of inhibitor immobilized on the surface of solid support

The goal of this experiment was to study the stability of VAD-FMK, a spotted inhibitor to assay for the binding of caspase 3.

### 1. Spotting of inhibitor on glass slides

The inhibitor VAD-FMK (Calbiochem) at 10 mg/ml is diluted to an appropriate concentration in protein spotting buffer containing Mannitol 1%. The spotting is performed with a pin and ring arrayer (with a pin of 0.250 mm diameter and the spots were around 0.35 mm final diameter). The Oligo (epoxy chemistry) slides (Eppendorf AG, Hambourg, Germany) are used as glass support. Following the spotting, slides were stored at 4°C until use.

### 2. Post Spotting treatment of the slides

After 4 washes for 1 minute with Phosphate Washing Buffer (Eppendorf AG, Hambourg, Germany), slides were dried. For detection of caspase binding, the slides chambers of 25 µl were contacted with 20 µl of Caspase 3 (Upstates, USA) at a concentration of 200 ng/20 µl and 20 ng/20 µl. Incubation was performed for 1 h in a thermomixer (Eppendorf AG, Hambourg, Germany) at 400 rpm, 22°C. After 3 washes for 2 min with Washing Buffer, slides were incubated for 1 h at 20°C with polyclonal rabbit anti-active caspase 3 (Promega) diluted 1/1000 in blocking buffer. After 3 washes for 2 min with Washing Buffer, slides were incubated for 45 minutes at 20°C with anti-rabbit IgG (H+L) cy3 conjugate diluted 1/1000 in blocking buffer. Slides were washed 4 times for 2 min in Washing Buffer and 2 times in distilled water before being read in a fluorescence array scanner.

## Claims

1. A method for the production of protein micro-arrays formed of discrete analyte-specific regions present on a solid support, wherein each discrete region contains a selected capture protein, said method comprising :
a) contacting a C₅ to C₇ polyol with a protein contained in a spotting solution or being present on an array,
b) optionally depositing the spotting solution on one of the discrete regions of the surface of a solid support,
c) allowing covalent fixation of the proteins on the surface of the support,
d) allowing the spotted solution to dry on the support,

2. The method of claim 1, wherein the polyol is a linear molecule.

3. The method of claim 1, wherein the polyol is selected from mannitol, maltitol or sorbitol.

4. The method of claim 1, wherein the polyol is a D-enantiomer.

5. The method of claim 1, wherein the polyol is a L-enantiomer.

6. The method of claim 2, wherein the linear polyols are linked to other molecules.

7. The method of claim 1, wherein the reagents used to form discrete regions in the micro-array are distinct capture proteins and wherein steps b) and c) are repeated until the micro-array has at least 4 discrete analyte-specific regions of capture proteins per cm² of solid support.

8. The method of claim 1, wherein the proteins deposited on the surface are selected from antigens, antibodies, receptors, ligands or enzymes.

9. The method of claim 1, wherein the proteins to be identified and/or quantified are selected from antigens, antibodies, receptors, ligands or enzymes.

10. The method of claim 1, wherein the polyol concentration is comprised between 1 and 5 % in the loading solution.

11. The method of claim 1, wherein the micro-array is stored between 0 and 8°C.

12. The method of claim 1, wherein the micro-array is stored between 15 and 30°C.

13. The method of claims 10-11, wherein the micro-array is stored under air conditions.

14. The method of claim 10-11, wherein the micro-array is stored under amorphous gas.

15. The method of claim 10-11, wherein the micro-array is stored under reduced pressure or under partial vacuum.

16. The method of claim 1, wherein all capture proteins have at least 70% of their activity after 6 months of storage, preferably after 12 months.

17. The method of claim 1, wherein the aqueous solution containing the polyol molecule also contain an anti-bacterial molecule.

18. A kit for the detection, identification and/or quantification of target proteins present in a biological sample or test solution, said kit comprising a protein micro-array as obtained by a method of claim 1.
